# EUROPEAN PATENT APPLICATION

(11) **EP 1 236 595 A1**
(43) Date of publication of application: **04.09.2002**
(21) Application number: 02003141.5
(22) Date of filing: 14.02.2002
(51) Int. Cl.: B60H 1/32, B60H 1/00

(54) **Vehicle air conditioning systems and methods for operating the same**

(30) Priority: 16.02.2001 JP 2001040635
(71) Applicant: Kabushiki Kaisha Toyota Jidoshokki, Kariya-shi, Aichi-ken (JP)
(72) Inventor: Egawa, Satoru, Kariya-shi, Aichi-ken (JP); Suitou, Ken, Kariya-shi, Aichi-ken (JP); Kimura, Kazuya, Kariya-shi, Aichi-ken (JP); Fukutani, Yoshikazu, Kariya-shi, Aichi-ken (JP); Sonobe, Masanori, Kariya-shi, Aichi-ken (JP); Najima, Kazuki, Kariya-shi, Aichi-ken (JP)
(74) Representative: HOFFMANN - EITLE

(57) **Abstract**

Vehicle air conditioning systems (2) may include an electrically driven compressor (4, 6) that is electrically connected to an alternator (16) driven by a vehicle engine (18). The compressor may be driven in a first drive mode, in which a normal drive control is performed. The compressor also may be driven in a second drive mode, in which the rotational speed of the compressor is increased, as compared to the normal drive control. The compressor may be driven in the second drive mode at least when vehicle running speed is being reduced.

## Description

The present invention generally relates to air conditioning systems for use in vehicles, including but not limited to electrically powered or hybrid vehicles or vehicles driven by an internal combustion engine, and methods for operating such air conditioning systems. More specifically, the present invention relates to techniques for efficiently utilizing excess kinetic energy generated when the vehicle reduces speed in order to heat or cool air for the vehicle interior.

Generally speaking, when vehicle speed is reduced, a portion of the kinetic energy of the vehicle (hereinafter called "speed reduction energy") can be recovered by an alternator or generator in the form of electric power. Therefore, known techniques recover or conserve such speed reduction energy by using the speed reduction energy to drive the alternator or generator at an increased rotational speed in order to increase the output of electric power while the vehicle speed is being reduced. Typically, this electric power is stored in a battery, which serves as a power source for the vehicle.

However, batteries can only store a finite amount of energy. Therefore, if the battery is fully charged when the alternator generates excess electrical power, the battery can not store the excess electrical power. In that case, the excess electrical power will instead be wasted in the form of heat radiation. Therefore, the prior art has not provided a useful technique for utilizing such excess electrical power that may be generated from speed reduction energy.

It is, accordingly, one object of the present invention to teach improved air conditioning systems for vehicles and methods for operating such air conditioning systems. For example, in one aspect of the present teachings, the air conditioning systems and methods for operating the same may provide improved efficiency for recovering speed reduction energy from the vehicle.

According to another aspect of the present teachings, air conditioners for vehicles are taught that include an electrically powered (or electrically driven) compressor. The compressor may serve as a drive source for the vehicle air conditioner and may be electrically connected to an alternator or generator that is driven by a vehicle engine. In one embodiment of the present teachings, the compressor may be driven in a first drive mode and a second drive mode. Normal compressor drive control is preferably performed in the first drive mode. However, in the second drive mode, the compressor is preferably driven at a higher speed than in the first drive mode. For example, the compressor may be driven in the second drive mode at least during the period in which vehicle speed is being reduced in order to efficiently utilize speed reduction energy that may otherwise be wasted, e.g., if the vehicle battery is fully charged. In the present specification, the "first drive mode" is intended to encompass known techniques for driving the compressor in order to suitably adjust the temperature within the vehicle interior (vehicle cabin) according to the preferred temperature for the vehicle occupants.

In the present specification, "air conditioner" and "air conditioning system" are intended to include devices for heating and/or cooling the interior of the vehicle (i.e., the vehicle cabin). Therefore, when vehicle speed is being reduced or decreased, the compressor may be driven at a higher speed than in the first drive mode. As a result, additional heating or cooling air may be supplied to the interior of the vehicle during the second drive mode as compared to during the first drive mode. In addition or in the alternative, additional potential energy may be stored within the air conditioning system (e.g., within a condenser or evaporator) during the second drive mode and this additional potential energy may be utilized during the first drive mode in order to reduce the power requirements of the air conditioning system during the first drive mode. Consequently, the speed reduction energy of the vehicle can be effectively utilized to drive the compressor (and thus the air conditioning system), thereby reducing the amount of power that must be supplied by other power sources (e.g., a vehicle battery) in order to operate the air conditioning system.

In the present specification, the first drive mode and the second drive mode may generally refer to the amount of energy supplied to drive the compressor. Thus, in one embodiment of the present teachings, the driving speed in the normal drive control (or the first drive mode) may be a speed that is set or pre-determined by various parameters in the normal air conditioning operation. For example, the driving speed in the first drive mode may be a fixed value or may vary within a practically usable speed range. Further, the driving speed in the second drive mode also may be a fixed value or may vary with changes in various conditions, as will be discussed further below.

In another aspect of the present teachings, various methods for operating vehicle air conditioning systems are taught. In one embodiment of this aspect, vehicle speed reduction is preferably detected and the compressor is preferably driven in the second drive mode in response to the detection of vehicle speed reduction. Naturally, such methods can efficiently utilize speed reduction energy as air conditioning energy and thereby increase the recovery efficiency of the speed reduction energy.

Additional objects, features and advantages of the present invention will be readily understood after reading the following detailed description together with the claims and the accompanying drawings, in which:
FIG. 1 is a schematic diagram of a representative air conditioning system; and
FIG. 2 is a flowchart showing a representative process that is performed by an electrical control unit (ECU) of the system shown in FIG. 1.

In one representative embodiment, air conditioning systems for vehicles are taught that include a compressor that is driven by an electric motor. The motor may be electrically connected to a means for converting rotational energy into electric current (e.g., an alternator or a generator) that is driven by a vehicle engine in order to generate electrical power. The compressor motor may be driven in a first drive mode, in which normal drive control of the compressor motor is performed. The compressor motor also may be driven in a second drive mode, in which drive control is performed so as to drive the compressor motor at a higher speed than in the first drive mode. The compressor motor may, e.g., be driven in the second drive mode at least during the period in which the vehicle speed is being reduced, such as when an engine brake has been applied to reduce the speed of a moving vehicle. Therefore, speed reduction energy may be effectively recovered and utilized as compressor motor driving energy.

In another representative embodiment, the driving speed of the compressor (or the compressor motor) in the second drive mode may be determined based upon a distribution ratio of the speed reduction energy between the engine brake and the alternator (or the generator). For example, the engine brake may consume or dissipate a portion of the speed reduction energy in order to reduce the vehicle speed. Another portion of the speed reduction energy may be utilized to drive the alternator. In general, the distribution ratio of the speed reduction energy for the engine brake and the alternator may vary with changes in a speed-change ratio of a transmission. Therefore, the speed reduction energy can be effectively recovered by increasing the driving speed of the compressor when the speed-change ratio is decreased. In this embodiment of the present teachings, additional speed reduction energy can be effectively recovered and utilized.

In another representative embodiment, a battery may be electrically coupled to the alternator or other means for converting rotational energy into electric current. The driving speed of the compressor motor in the second drive mode may be determined based upon a ratio of the amount of electric power generated by the alternator and the amount of electric power stored in the battery when the vehicle begins the second drive mode. For example, less power derived from the speed reduction energy may be utilized to charge the battery when the battery is at or near full charge capacity. In that case, a majority of the speed reduction energy may be converted into air conditioning energy by increasing the driving speed of the compressor. On the other hand, if a relatively low amount of charge is stored in the battery when the second drive mode is begun, a larger amount of the speed reduction energy may be utilized in order to re-charge the battery to its full capacity.

In another aspect of the present teachings, various methods for operating a vehicle air conditioning system are taught. Such methods may include detecting a reduction in vehicle speed using, e.g., a sensor. For example, the sensor may output control signals that may be utilized to cause the compressor motor to be driven in the second drive mode. Naturally, such methods may be utilized to efficiently recover speed reduction energy in order to drive the air conditioning system at a higher rate, which will thereby increase the amount of recovered speed reduction energy.

Each of the additional features and teachings disclosed above and below may be utilized separately or in conjunction with other features and teachings to provide improved air conditioning systems and methods for designing and using such air conditioning systems. A representative example of the present invention, which examples utilize many of these additional features and teachings both separately and in conjunction, will now be described in detail with reference to the attached drawings. This detailed description is merely intended to teach a person of skill in the art further details for practicing preferred aspects of the present teachings and is not intended to limit the scope of the invention. Only the claims define the scope of the claimed invention. Therefore, combinations of features and steps disclosed in the following detail description may not be necessary to practice the invention in the broadest sense, and are instead taught merely to particularly describe representative examples of the invention. Moreover, various features of the representative examples and the dependent claims may be combined in ways that are not specifically enumerated in order to provide additional useful embodiments of the present teachings.

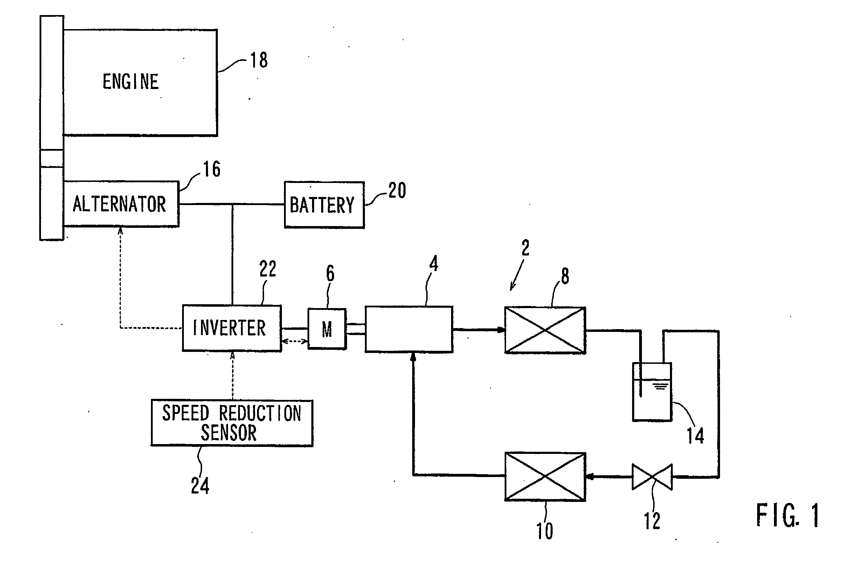

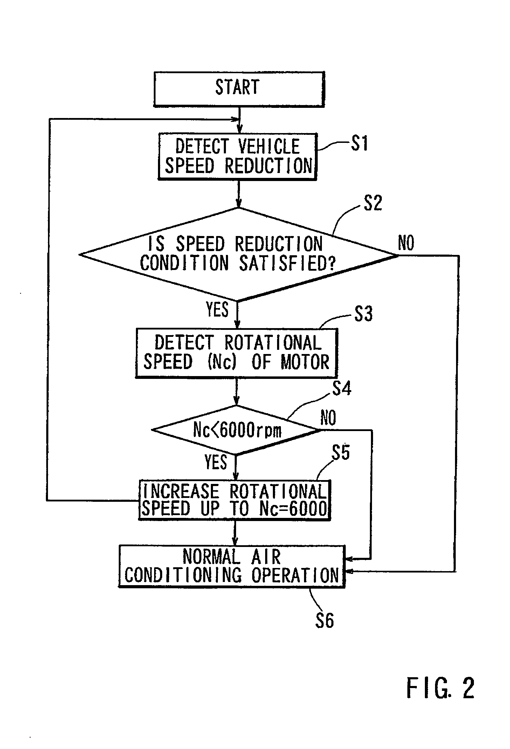

A representative embodiment of an air conditioning system for vehicles will now be described with reference to FIGS. 1 and 2. Referring to FIG. 1, the representative air conditioning system is shown in a block diagram. Solid line arrows in FIG. 1 indicate the flow direction of a cooling medium (e.g., a refrigerant) via a flow line of the air conditioner during a cooling operation. Solid lines also indicate electrical connections or communication paths between electric parts of the system. Output signals from some of the electric parts are indicated by dotted line arrows, as will be discussed further below.

As shown in FIG. 1, a representative air conditioning system 2 may include a compressor 4, an electric motor 6, a condenser 8 and an evaporator 10 and these components preferably communicate with each other in order to form an air conditioning circuit. The compressor 4 may serve to absorb, compress and discharge a gaseous cooling medium, such as a refrigerant (not shown), that flows within the air conditioning circuit. The electric motor 6 may serve to drive the compressor 4. The condenser 8 may condense high pressure gaseous cooling medium from the compressor 4 and may serve as a heat exchanger for cooling the cooling medium using outside air or a cooling liquid. The condensed and cooled cooling medium is converted to a liquid phase and may then be evaporated with the evaporator 10, which serves as a heat exchanger for generating cooling air that may ultimately be directed into the vehicle interior (vehicle cabin). An expansion valve 12 may be disposed within the flow line between the condenser 8 and the evaporator 12 and may serve to control the flow rate of the cooling medium. A receiver 14 also may be disposed within the flow line on the upstream side of the expansion valve 12. The receiver 14 may serve to control the flow of cooling medium that is discharged from the condenser 8. The receiver 14 also may serve to remove foreign materials, such as solid particles and water, from the cooling medium.

An engine 18 of the vehicle may drive an alternator or a synchronous generator 16 (i.e., means for converting rotational energy into electric current) via a belt or another suitable transmission mechanism (not shown), so that the alternator 16 may generate electrical power (electric current). The alternator 16 may be electrically connected to a battery 20, so that the electric power generated by the alternator 16 also may be utilized to charge the battery 20. The engine 18 may preferably be an internal combustion engine.

In the representative system, the alternator 16 also may be electrically connected to the motor 6 via an inverter 22, which may serve as a DC/AC converter. Therefore, the power from the alternator 16 also maybe supplied to the motor 6 in order to drive the compressor 4.

In this embodiment, the inverter 22 may serve as a controller that may receive output signals from a speed reduction sensor 24 so as to generate control signals. The control signal may be supplied to both the alternator 16 and the motor 6. The speed reduction sensor 24 may comprise, e.g., a vehicle speed sensor, an accelerator sensor, a brake sensor or a combination of two or more of such sensors. For example, the vehicle speed sensor may output a "vehicle is reducing speed" signal and/or a "vehicle is not reducing speed" signal. The accelerator sensor may output an "accelerator pedal operated" signal and/or an "accelerator pedal not operated" signal. The brake sensor may output a "brake pedal pressed" signal and/or a "brake pedal not pressed" signal. Naturally, the present teachings are not limited to such sensors and any sensor that can detect a reduction in vehicle speed may be suitably utilized with the present teachings. Because such sensors are well known in the art, further explanation is not required.

In general, when the speed of a moving vehicle is being reduced, the kinetic energy of the vehicle may be consumed or dissipated as a braking force applied by the engine 18 and/or the kinetic energy of the vehicle may be converted into electric power by the alternator 16. According to the teachings of the representative air conditioning system 2 and the representative methods for operating the same, the air conditioning system 2 may be driven at a higher load (e.g., at a higher speed) during the speed reduction period than during normal operation. For example, the motor 6 may be rotated at a higher rotational speed during this speed reduction period than during normal air controlling operation. Therefore, the speed reduction energy can be effectively used to improve the energy recovering efficiency. In addition, the speed reduction energy also may be consumed or dissipated as a frictional force produced by a foot brake and/or as an internal resistance force that may be produced by various movable vehicle parts.

A representative method for operating an air conditioning system will now be described with reference to FIG. 2. The representative method may be substantially performed by an electric control unit (ECU), which preferably may include a central processing unit (CPU) or another type of controller. For example, the alternator 16 and the inverter 22 may have respective ECUs.

When speed reduction is detected, e.g., by the sensor 24, while,the air conditioning system 2 is being driven in the normal operating mode (first drive mode) (Step S1), the process proceeds to Step S2 in order to determine whether or not a predetermined speed reduction condition has been established. If the determination in Step S2 is YES, the process proceeds to Step S3. For example, the predetermined speed reduction condition may include, e.g., release of an accelerator pedal and/or pressing a brake pedal while the vehicle is moving. If the determination in Step S2 is NO, the process proceeds to Step S6 and the compressor continues to be operated according to the normal operation mode. For example, in Step S6, the air conditioning system 2 may be operated in the above-described first drive mode, in which, the ECU may, e.g., cause the inverter 22 to rotate the motor 6 at a constant speed or at a speed that varies according to the set temperature or other heating/cooling parameters, which will be discussed further below.

In Step S3, the rotational speed (Nc) of the compressor motor 6 is detected and the process then proceeds to Step S4, in which the detected rotational speed (Nc) may be compared to a reference or pre-determined rotating speed. In this representative embodiment, the reference speed may be stored in the ECU and may be, e.g., 6,000 rpm. If the detected rotational speed (Nc) is lower than the reference speed, the process proceeds to Step S5. On the other hand, if the detected rotational speed (Nc) is higher than the reference speed, the process proceeds to Step S6 and normal air control is performed.

In Step S5, the rotational speed of the compressor motor may be increased until the rotational speed reaches the reference speed (e.g., 6,000 rpm). For example, the motor 6 may be operated in the above-described second drive mode, in which drive control is performed so as to drive the compressor motor at a higher speed than in the first drive mode. Thus, in the second drive mode, the motor 6 may rotate at a higher speed than in the first drive mode. The reference speed may be, e.g., a maximum tolerable speed of the motor 6 or may vary with various changes in the operating conditions, which will be discussed further below. After Step S5, the process returns to Step S1 to repeatedly perform the same process steps.

If the rotational speed of the compressor motor 6 is increased in Step S5, the heating and/or cooling effect of the air conditioning system 2 may be increased. In addition, as the rotational speed of the motor 6 increases, the inverter 22 or the inverter ECU may output signals to the alternator 16 or the alternator ECU so as to increase the load applied to the alternator 16. In that case, the alternator 16 will generate an increased amount of electric power (current). A portion of the generated electric power optionally may be supplied to the battery 20 in order to charge the battery 20.

For example, when the motor 6 is operated in the second drive mode, the cooling effect of the evaporator 10 may be greater than in the first drive mode (i.e., normal air conditioning operation). Therefore, the air conditioning system 2 will be capable of supplying increased cooling air to the vehicle interior in order to impart an excessive cooling condition. Thus, a greater amount of cooling energy may be imparted to the air in the vehicle interior than during the normal operation. In addition or in the alternative, the excess energy can be utilized to compress the cooling medium (refrigerant) and the excess compressed cooling medium may be temporarily stored within the air conditioning system 2 until required to cool the vehicle interior. For example, the excess energy may effectively be stored and then utilized during the normal operating mode (first drive mode) in order to reduce power demands during the normal operating mode.

Thus, the cooling effect supplied to the vehicle interior preferably may be delayed for some time after the compressor 6 has begun to operate in the second drive mode. That is, the increased cooling effect may be effectively stored within the air conditioning system 2 and the stored air conditioning energy (i.e., stored cooling capacity) may be supplied to the vehicle interior after the speed reduction period. For example, the stored air conditioning may be discharged after the air conditioning system 2 has reverted to the first drive mode. In this case, the additional cooling effect may still be utilized by the air conditioning system at a later time, such as after the vehicle has stopped in order to idle. Thus, by storing the speed reduction energy within the air conditioning system 2 in the form of compressed refrigerant, overall power demands on the air conditioning system 2 may be effectively reduced.

According to the present representative embodiment, when the vehicle speed is being reduced, a portion of the speed reduction energy can be effectively utilized as air conditioning energy by performing an excess cooling operation, in which the rotational speed of the motor 6 is faster than during normal operation. Therefore, speed reduction energy can be more effectively recovered. As a result, the motor 6 can be, e.g., operated at a lower speed during normal air control operation (e.g., the above-described first mode) than in the known air conditioning systems that do not incorporate the present teachings. Consequently, engine energy consumption (e.g., engine fuel or power consumption) can be reduced.

As described above, as the rotational speed of the motor 6 increases, the load applied to the alternator 16 may be increased so as to generate increased power. In some cases, power stored in the battery 20 also may be consumed when the rotational speed of the motor 6 has been increased. Therefore, as the rotational speed of the motor 6 increases, the load on the alternator 16 may be increased, for example, by increasing the magnetic field current applied to the alternator 16.

The above-described representative embodiment may be modified in various ways. For example, the rotational speed of a fan of a blower that is associated with the evaporator 10 may be temporarily reduced or decreased when the compressor motor is rotating at a relatively high speed during the speed reduction operation (e.g., the second drive mode). In this case, the amount of cooling air that flows into the vehicle interior can be reduced or decreased in order to delay the cooling effect within the vehicle interior. As a result, "comfort control" is enabled with the present air conditioning system so as to effectively delay the use of the additional (potential) energy stored in the evaporator 10.

In another modification, the rotational speed of the motor 6 in the second drive mode may be determined based upon the ratio of (1) the amount of the speed reduction energy consumed by the engine brake and (2) the amount of speed reduction energy consumed by the alternator 16. Generally speaking, the braking effect of the engine may vary with changes in the speed-change ratio of a transmission. Thus, as the speed-change ratio increases, the engine brake consumes or dissipates a greater amount of the speed reduction energy. Therefore, the speed reduction energy may be further effectively recovered by increasing the rotational speed of the motor 6 in response to an increase in the speed-reduction ratio.

In another modification, the rotational speed of the motor 6 in the second drive mode may be determined based upon the ratio of (1) the amount of power generated by the alternator 16 and (2) the charge status the battery 20 during the second drive mode. For example, a battery voltage sensor (not shown) may detect the charge status of the battery 20 (i.e., the battery voltage sensor may determine whether the battery 20 requires charging in order to increase the energy stored in the battery 20 to its chargeable capacity). The rotational speed of the motor 6 during the second drive mode may be increased if the battery 20 is at or near its chargeable capacity. On the other hand, the rotational speed of the motor 6 during the second drive mode may be decreased if the battery 20 requires charging. In the latter condition, a greater portion of the electric current generated by the alternator 16 will be supplied to the battery 20. Thus, speed reduction energy can be more effectively recovered in this modification.

Although the representative embodiment concerns an air conditioning system for cooling the vehicle interior, the present teachings naturally may be also applied to an air conditioning system that can serve as a heat pump. Thus, heating operations also can be performed in order to increase the heating effect during the speed reduction operation. Consequently, air conditioning systems according to the present teachings may include a cooling system and/or a heating system.

According to the present teachings, means for converting rotational energy into electric current are not particularly limited and may include any devices that are capable of converting (mechanical) rotational energy into electric power (e.g., electric current). Thus, alternators and generators are well known examples of such energy converting means.

## Claims

1. A vehicle air conditioning system (2) comprising:
an alternator (16) driven by a vehicle engine (18),
an electrically driven compressor (4) electrically connected to the alternator, wherein the vehicle air conditioning system is arranged and constructed to drive the compressor in a first drive mode and a second drive mode, wherein normal drive control of the compressor is performed in the first drive mode, and the compressor is driven at a higher speed during the second drive mode than during the first drive mode, wherein the second drive mode is selected when vehicle speed is being reduced.

2. An air conditioning system as in claim 1, wherein the air conditioning system is arranged and constructed to adjust the driving speed of the compressor during the second drive mode based upon a distribution ratio of (1) vehicle speed reduction energy that is utilized for an engine brake and (2) vehicle speed reduction energy that is utilized by the alternator to generate electric power.

3. An air conditioning system as in claim 1 or 2, further including a battery (20) electrically connected to the alternator, wherein the air conditioning system is further arranged and constructed to adjust the driving speed of the compressor during the second drive mode based upon a ratio of (1) an amount of electric power generated by the alternator to (2) an amount of electrical power required to charge the battery to its full chargeable capacity.

4. An apparatus for recovering rotational energy of a vehicle engine comprising:
means (16) for converting at least a portion of the rotational energy of the engine into a different form of energy;
means (20) for storing the converted energy;
means (4) for driving an air conditioner using the converted energy; and
means (22) for controlling the amount of energy consumed by the air conditioner in response to a vehicle condition, wherein the amount of energy consumed by the air conditioner increases at least when vehicle speed is being reduced.

5. An apparatus comprising:
means (16) for converting at least a portion of rotational energy of a vehicle engine into a different form of energy, which energy may be utilized to drive an air conditioner,
means (24) for detecting application of a braking force on the engine; and
means (22) for increasing the amount of converted energy that is consumed by the air conditioner in response to the detection of the braking force.

6. An apparatus comprising:
an energy converting means (16) for converting rotational energy of a vehicle engine (18) into a different form of energy;
an accumulator (20) for storing the energy generated by the energy converting means;
an air conditioner (2) driven by energy from the energy converting means and/or the accumulator; and
a controller (22) arranged and constructed to control the amount of energy consumed by the air conditioner in response to a vehicle condition, wherein an increased amount of energy is consumed by the air conditioner when vehicle speed is being reduced.

7. An apparatus as in claim 6, wherein the controller is arranged and constructed to control the amount of energy generated by the energy converting means in response to the amount of energy consumed by the air conditioner.

8. An apparatus as in claim 6 or 7, wherein the energy converting means comprises an alternator (16) that converts the rotational energy of the vehicle engine into electrical energy, and wherein the accumulator comprises a battery.

9. An apparatus as in claim 6, wherein the air conditioner comprises a compressor (4) and an electric motor (6) that drives the compressor using electrical energy supplied by the alternator and/or the battery.

10. An apparatus as in claim 9, wherein the controller comprises means (22) for controlling the amount of rotational energy that is converted into the electrical energy by the alternator.

11. An apparatus as in claim 9 or 10, further including a sensor (24) coupled to the controller and detecting the reduction in vehicle speed, wherein the controller adjusts the electrical energy supplied to the electric motor driving the compressor in response to output signals from the sensor.

12. An apparatus as in any of claims 6-11, wherein the controller is arranged and constructed to drive the motor in a first drive mode for normal air conditioning operation and in a second drive mode when reduced vehicle speed is detected.

13. An apparatus as in claim 12, wherein the controller is arranged and constructed to control the electric motor in the second drive mode, so that the rotational speed of the electric motor is increased to a predetermined value in response to detection of the rotational speed of the electric motor set for the first drive mode being less than the predetermined value.

14. An apparatus as in any of claims 6-13, wherein the controller is arranged and constructed to determine the amount of energy that will be consumed by the air conditioner based upon a ratio of energy consumption by an engine brake to energy consumption by the energy converting means.

15. An apparatus as in any of claims 6-14, wherein the controller is arranged and constructed to determine the amount of energy that will be consumed at the air conditioner based upon a ratio of the amount of energy generated by the energy converting means and the chargeable capacity of the accumulator.

16. A method for recovering rotational energy of a vehicle engine (18) comprising:
converting at least a portion of the rotational energy of the engine (18) into a different form of energy;
storing the converted energy in an accumulator (20);
driving an air conditioner (2) using the converted energy; and
controlling the amount of energy consumed by the air conditioner in response to a vehicle condition, wherein the amount of energy consumed by the air conditioner increases at least when vehicle speed is being reduced.

17. A method comprising:
converting at least a portion of rotational energy of a vehicle engine (18) into a different form of energy, which energy may be utilized to drive an air conditioner (2);
detecting application of a braking force on the engine (18); and
increasing the amount of converted energy that is consumed by the air conditioner in response to the detection of the braking force.

18. A method as in claim 17, further including increasing the conversion of the rotational energy of the engine into the different form of energy in response to the detection of the braking force.

19. A method as in claim 17 or 18, further including storing the converted energy that is not utilized to drive the air conditioner.

20. A method for operating a vehicle air conditioning system (2), the air conditioning system including an electrically driven compressor (4) that is electrically connected to an alternator (16) driven by a vehicle engine (18), the compressor being driven in a first drive mode, in which normal drive control is performed, and a second drive mode, in which the compressor is driven at a higher speed than in the normal drive control, the method comprising:
detecting a reduction of vehicle speed and
operating the compressor in the second drive mode upon detection of the vehicle speed reduction.

21. A method as in claim 20, further including reducing an amount of airflow into an interior of the vehicle in response to increased cooling or heating supplied by the air conditioning system.
